# EUROPÄISCHE PATENTSCHRIFT

(11) **EP 1 521 012 B1**
(45) Veröffentlichungstag und Bekanntmachung des Hinweises auf die Patenterteilung: **20.02.2008**
(21) Anmeldenummer: 03103619.7
(22) Anmeldetag: 30.09.2003
(51) Int. Cl.: F16F 15/139

(54) **Drehschwingungsdämpfer**
Torsional vibration damper
Amortisseur de vibrations torsionelles

(43) Veröffentlichungstag der Anmeldung: 06.04.2005
(73) Patentinhaber: Getrag Ford Transmissions GmbH, 50725 Köln (DE)
(72) Erfinder: Absenger, Marc, 42279 Wuppertal (DE); Petri, Hans, 53804 Much (DE)
(74) Vertreter: Drömer, Hans-Carsten

(56) Entgegenhaltungen:
- DE-A- 19 614 002
- DE-A- 19 832 139
- US-A- 4 583 959

## Beschreibung

Die Erfindung betrifft einen Drehschwingungsdämpfer insbesondere für Kraftfahrzeuge. Der Drehschwingungsdämpfer weist ein erstes Drehteil und ein zweites Drehteil auf, wobei die beiden Drehteile auf einer Drehachse angeordnet sind und entgegen einer Wirkung wenigstens eines Energiespeichers relativ zueinander drehbeweglich sind, bei einer Drehbewegung zwischen erstem und zweitem Drehteil wenigstens ein Reibelement entlang einer Reibfläche gleitet und wobei wenigstens eine Feder das Reibelement gegen die Reibfläche drückt.

Derartige Drehschwingungsdämpfer in Form von sogenannten Zweimassenschwungrädern sind unter anderem aus der DE 40 30 285 A1, DE 102 41 879 A1 oder der DE 44 17 660 A1 bekannt. Beispielsweise offenbart die DE 40 30 285 A1 einen Drehschwingungsdämpfer, dessen erstes Drehteil über eine Nabe mit einer Motorkurbelwelle verbunden ist. Das zweite Drehteil besitzt eine Platte, die als Schwungrad einer Kupplung dient. Somit ist der Drehschwingungsdämpfer zwischen Motor und Kupplung geschaltet. Das erste Drehteil und das zweite Drehteil bieten jeweils eine Auflage für Schraubenfedern, die einer relativen Drehbewegung der beiden Drehteile entgegenwirken, so daß Drehschwingungen im Antriebsstrang gedämpft werden können. Des weiteren tragen eine Vielzahl von Reibelementen zur Dämpfung bei, die auf eine ringförmige Umfangsfläche des zweiten Drehteils durch elastische Zwischenstücke gedrückt werden.

Aus der US 4583959 ist ein Drehschwingungsdämpfer für ein Kraftfahrzeug bekannt, bei dem ein erstes und ein zweites Drehteil auf einer Drehachse angeordnet sind und die entgegen der Wirkung einer zwischen den beiden angeordneten Schraubendruckfeder relativ zueinander drehbeweglich sind. Weiterhin ist zwischen den beiden Drehteilen ein in Umfangsrichtung gewelltes, elastisches Reibelement angeordnet, dass mit dem ersten Drehteil drehfest verbunden ist und mit einer in Umfangsrichtung wellenförmig ausgebildeten Reibfläche des zweiten Drehteils zusammenwirkt. Bei einer aus einer Drehschwingung resultierenden Verdrehungen der beiden Drehteile gegeneinander reibt das Reibelement mit einer wechselnden Reibkraft über die Reibfläche, wobei die Höhe der Reibkraft von der Auslenkung der Verdrehung abhängig ist.

Nachteilig ist bei dieser Anordnung, daß abhängig von der Auslenkung relativ hohe Axialkräfte zwischen den beiden Drehteilen entstehen, die durch geeignete konstruktive Maßnahmen aufgefangen werden müssen. Weiterhin ist eine genaue Einstellung der auslenkungsabhängigen Reibkraft schwierig, da schon geringe Änderungen der Dicke und der Welligkeit des Reibelementes, die unter anderem aus Fertigungstoleranzen, Verschleiß und/oder Temperaturausdehnung resultieren können, zu sehr großen Änderungen der resultierenden Reibkraft führen.

Der Erfindung liegt die Aufgabe zu Grunde, Drehschwingungsdämpfer der vorerwähnten Art bezüglich deren Dämpfungsverhalten zu optimieren.

Die der Erfindung zu Grunde liegende Aufgabe wird dadurch gelöst, daß die Reibfläche als Rampe ausgebildet ist, wodurch beim Gleiten des Reibelements entlang der Reibfläche die Feder verschieden weit ausgelenkt ist.

Die durch das Gleiten des Reibelements auf der Reibfläche verursachte Reibkraft ist abhängig von der Kraft, mit der das Reibelement gegen die Reibfläche gedrückt wird. Die Feder, die das Reibelement gegen die Reibfläche drückt, wird erfindungsgemäß in Abhängigkeit des Weges der Reibelements entlang der Reibfläche verschieden weit auseinander gezogen oder gedehnt beziehungsweise zusammengedrückt oder gestaucht. Die Verformung der Feder ist bei elastischen Federn nach dem Hook'schen Gesetz proportional zu der Federkraft. Somit verändert sich mit der Position des Reibelementes auf der rampenförmigen Reibfläche die Reibkraft. Die Rei b-kraft ist folglich eine Funktion der Position des Reibelements auf der Reibfläche.

Die Reibkraft wiederum beeinflusst das Dämpfungsverhalten des Drehschwingungsdämpfers. Daher lässt sich durch die Form der Rampe und durch die Wahl der Feder beziehungsweise der Federkonstanten das Dämpfungsverhalten des Drehschwingungsdämpfers gezielt beeinflussen. Dies gilt insbesondere dann, wenn die Position des Reibelements auf der Rampe eindeutig von einem Verdrehwinkel zwischen dem ersten und zweiten Drehteil abhängt, wobei der Verdrehwinkel in einer statischen Ruhelage den Wert null annehmen soll. So lässt sich jedem Verdrehwinkel eine definierte Federkraft und damit eine definierte Reibkraft zuordnen.

Die Rampe kann linear ansteigen, so daß mit dem auf der Rampe zurückgelegten Weg des Reibelements die Federkraft ebenfalls linear ansteigt. Die Rampe kann aber auch nach einer beliebigen, nicht-linearen Funktion ansteigen, einen höchsten Punkt aufweisen und danach wieder abfallen.

Der Drehschwingungsdämpfer kann eine Vielzahl von Reibelementen aufweisen, die auf jeweils unterschiedlich geformten Reibflächen gleiten. Beispielsweise kann ein Reibelement derart ausgelegt sein, daß es erst bei einem bestimmten Verdrehwinkel Reibung erzeugt. Auch können die Federkräfte, mit denen die jeweiligen Reibelemente beaufschlagt werden, in einem weiten Maße unterschiedlich sein.

In einem bevorzugten Ausführungsform ist das Reibelement drehfest an dem ersten Drehteil befestigt. Dabei stützt die Feder sich einerseits an dem ersten Drehteil und andererseits an dem Reibelement ab. Die Feder drückt das Reibelement in radialer Richtung gegen eine im Wesentlichen ringförmige Umfangsfläche des zweiten Drehteils. Die ringförmige Umfangsfläche oder Umfangswandung des zweiten Drehteils dient als Reibfläche, wobei der (radiale) Abstand der Umfangswandung zur Drehachse nicht konstant ist. Die Umfangsfläche ist daher nur in ihrer Grundform ringförmig, sie weist Abflachungen und/oder Erhöhungen auf.

Wird eine Schraubenfeder als Feder verwendet, stützt sich die Feder mit einem ersten Ende am ersten Drehteil und mit einem zweiten Ende am Reibelement ab. Da sich bei einer relativen Drehbewegung der Drehteile das erste Ende der Feder auf einer Kreisbahn bewegt, variiert durch die Abflachungen und/oder Erhöhungen der Abstand zwischen dem ersten Ende der Feder und dem zweiten Ende der Feder, da das Reibelement der Kontur der Reibfläche folgt. Folglich wird in Abhängigkeit des Verdrehwinkels die Feder mehr oder weniger zusammengedrückt. Eine Abflachung oder Erhöhung würde bei einer gedachten Abwicklung der ringförmigen Umfangsfläche bei der abgewickelten, dann als Gerade verlaufenden Umfangsfläche als Rampe hervortreten.

Die ringförmige Umfangsfläche des zweiten Drehteils ist vorzugsweise nach innen gerichtet, wobei das an dem ersten Drehteil befestigte Reibelement radial nach au-ßen gedrückt wird. Wenn das Reibelement entlang einer Abflachung gleitet, wird die das Reibelement radial nach innen gedrückt, wobei die Federkraft und damit die Reibkraft ansteigen.

Die Feder kann als Blattfeder ausgebildet sein. Vorzugsweise weist die Blattfeder eine gewölbte Form auf, wobei sich wenigstens eine Wölbung gegen das erste Dre h-teil oder das Reibelement abstützt.

Das Reibelement weist vorzugsweise eine gewölbte Fläche auf, so daß ein flächiger Kontakt mit der im Wesentlichen ringförmigen Reibfläche zu Stande kommt. Dies erhöht die Reibung zwischen Reibelement und Reibfläche. Bei dem Ausführungsbeispiel mit der nach innen gerichteten Umfangsfläche, die als Reibfläche fungiert, ist die Wölbung oder Krümmung der Fläche des Reibelements vorzugsweise zumindest an ihren Enden größer als die Krümmung der ringförmigen Reibfläche, so daß das Reibelement sanft auf eine Rampe auflaufen kann.

In einem bevorzugten Ausführungsbeispiel bilden das Reibelement und die Reibfläche ein Element einer Ringfeder (Ringfederelement). Vorzugsweise umfasst die Ringfeder mehrere Innenringe und Außenringe, wobei ein Innenring wenigstens eine nach außen gerichtete Kegelfläche und ein Außenring wenigstens eine nach innen gerichtete Kegelfläche aufweist. Ein Innenring und ein Außenring berühren sich an ihren Kegelflächen, wobei diese wirksame Kegelfläche hier als ein Ringfederelement gelten soll. Eine Ringfeder zeichnet sich durch einen hohen Gewichtsnutzwert (Federarbeit und Dämpfungsarbeit bezogen auf das Gewicht) aus und kann vergleichsweise große Energien aufnehmen.

Vorzugsweise weist ein Innenring einer Ringfeder an seinem Außenumfang zwei nach außen gerichtete Kegelflächen auf, während sein Innenumfang zylindrisch ausgeformt ist, so daß das Profil des Innenrings in etwa die Form eines gleichschenkligen Dreiecks hat. Der Außenring weist hingegen an seinem Innenumfang zwei nach innen gerichtete Kegelflächen und einen zylindrischen Außenumfang auf. Innenring und Außenring sind abwechselnd in axialer Richtung der Ringfeder hintereinander angeordnet, wobei ein halber Innenring und ein halber Außenring eine wirksame Kegelfläche und somit ein Ringfederelement bilden.

Wird die Ringfeder mit einer axialen Kraft beaufschlagt, dehnen sich die Außenringe, während die Innenringe gestaucht werden. Der Außenring schiebt sich entlang der Kegelfläche auf den Innenring. Die höchste Beanspruchung erfahren dabei die Ringe in tangentialer Richtung.

Der Außenring (für den Innenring gilt sinngemäß das gleiche) kann dabei als Reibelement aufgefasst werden, das entlang einer Rampe, nämlich entlang der Kegelfläche, bewegt wird. Dabei wird das Reibelement beziehungsweise der Außenring aufgrund des gedehnten Zustands des Außenrings gegen die Reibfläche beziehungsweise gegen den Innenring gedrückt. Reibelement und die das Reibelement auf die Reibfläche drückende Feder sind folglich in diesem Ausführungsbeispiel einstückig in Form des Außenrings ausgebildet. Wird der Außenring weiter auf den Innenring geschoben, wird der Außenring weiter verformt, was den Druck und damit die Reibung zwischen Außenring und Innenring weiter ansteigen lässt.

Die Ringfeder kann einen maximalen Federweg aufweisen, der durch Anlage von stirnseitigen Enden der Innenringe und/oder durch Anlage von stirnseitigen Enden der Außenringe definiert wird. Dabei bilden die Innenringe eine starre Säule und/oder die Außenringe eine starre Säule, die in axialer Richtung der Ringfeder nicht weiter zusammengedrückt werden können. So ist sichergestellt, daß die durch die Dehnungen und Stauchungen verursachten tangentialen Spannungen in den Ringen die zulässigen Spannungswerte nicht überschreiten.

In einem bevorzugten Ausführungsbeispiel verläuft die Achse der Ringfeder im Wesentlichen in Umfangsrichtung des ersten und zweiten Drehteils, wobei ein erstes stirnseitiges Ende der Ringfeder sich in Umfangsrichtung an dem ersten Drehteil abstützt und ein zweites stirnseitiges Ende der Ringfeder sich in Umfangsrichtung an dem zweiten Drehteil abstützt. Wenn die beiden Drehteile zueinander verdreht werden, ändert sich der Abstand zwischen den beiden stirnseitigen Enden: die Ringfeder wird ausgelenkt. Der Federweg der Ringfeder ist damit in guter Näherung proportional zu dem Verdrehwinkel und dem radialen Abstand der Ringfeder zu der Drehachse.

Vorzugsweise ist in Umfangsrichtung des ersten und zweiten Drehteils zwischen dem ersten stirnseitigen Ende der Ringfeder und dem ersten Drehteil wenigstens eine erste Schraubenfeder angeordnet. Alternativ oder zusätzlich kann wenigstens eine zweite Schraubenfeder zwischen dem zweiten stirnseitigen Ende der Ringfeder und dem zweiten Drehteil angeordnet sein.

Die zwischen erstem und zweiten Drehteil eingesetzte Ringfeder und die Schraubenfedern sind in Reihe geschaltet. Jede in Reihe geschaltete Feder wird mit der gleichen Kraft beaufschlagt. Eine weichere Feder beziehungsweise eine Feder mit einer kleineren Federkonstanten wird dabei stärker ausgelenkt. Schraubenfeder und Ringfeder sind vorzugsweise so aufeinander abgestimmt, daß die Ringfeder erst dann eine nennenswerte Energie aufnimmt, wenn der Federweg der Schraubenfedern erschöpft ist beziehungsweise wenn ein maximaler Verdrehwinkel zwischen erstem und zweitem Drehteil fast erreicht ist (der Federweg der Ringfeder ist in der Regel viel kleiner als der Federweg der Schraubenfeder). Somit federt und dämpft die Ringfeder die Drehbewegung der beiden Drehteile an den Enden des Verdrehwinkelbereichs ab. Dadurch werden Schläge aufgefangen, die insbesondere bei Lastwechseln auftreten können.

Anhand eines in den Figuren dargestellten bevorzugten Ausführungsbeispiels wird die Erfindung näher beschrieben. Es zeigen
- Figur 1: einen erfindungsgemäßen Drehschwingungsdämpfer mit einem ersten und zweiten Drehteil;
- Figur 2: den Drehschwingungsdämpfer der Figur 1, wobei das erste Drehteil bezogen auf das zweite Drehteil eine andere Drehposition einnimmt;
- Figur 3: eine vergrößerte Teilansicht der Figur 1; und
- Figur 4: eine vergrößerte Teilansicht der Figur 2.

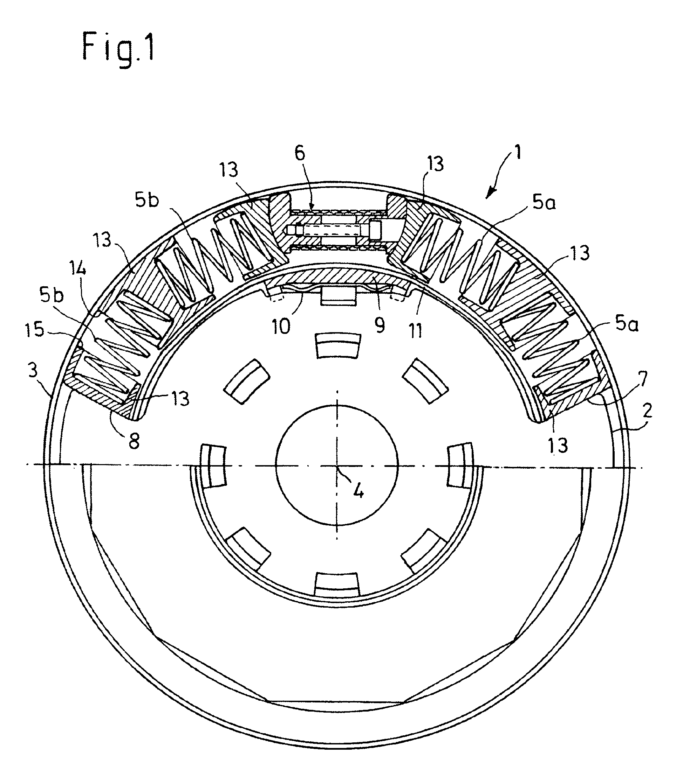

Figur 1 zeigt einen Drehschwingungsdämpfer 1 mit einem ersten Drehteil 2 und einem zweiten Drehteil 3. Das erste Drehteil 2 und das zweite Drehteil 3 sind um eine Drehachse 4 drehbeweglich angeordnet. Die Drehachse 4 erstreckt sich senkrecht zur Zeichnungsebene der Figur 1.

Zwischen dem ersten Drehteil 2 und dem zweiten Drehteil 3 sind in Umfangsrichtung Energiespeicher in Form von Schraubenfedern 5a, 5b angeordnet. Eine Schraubenfeder 5a, 5b erstreckt sich dabei mit ihrer Längsachse im Wesentlichen in Umfangsrichtung der beiden Drehteile. Zwischen jeweils zwei in Reihe geschalteten Schraubenfedern ist eine Ringfeder 6 angeordnet.

Das Federpaket, bestehend aus den Schraubenfedern 5a, 5b und der Ringfeder 6, stützt sich mit einem ersten Ende 7 gegen das erste Drehteil 2 ab, während sich ein zweites Ende 8 des Federpakts gegen das zweite Drehteil 3 abstützt. Somit wirkt das Federpaket, ausgehend von der in Figur 1 gezeigten Lage der beiden Drehteile 2, 3, einer relativen Drehbewegung der Drehteile 2, 3 entgegen. Figur 1 zeigt den Drehschwingungsdämpfer 1 in einer statischen Ruhelage.

An dem ersten Drehteil 2 ist drehfest ein Reibelement 9 befestigt. In radialer Richtung des ersten Drehteils 2 wird das Reibelement 9 mit der Kraft einer als Blattfeder ausgebildete Feder 10 gegen eine in ringförmige, nach innengerichtete Reibfläche 11 des zweiten Drehteils 3 gedrückt. Bewegen sich die Drehteile 2, 3 relativ zuein-ander, gleitet das Reibelement 9 entlang der Reibfläche 11. Die dabei verursachte Reibung wirkt einer relativen Drehbewegung der beiden Drehteile 2, 3 entgegen.

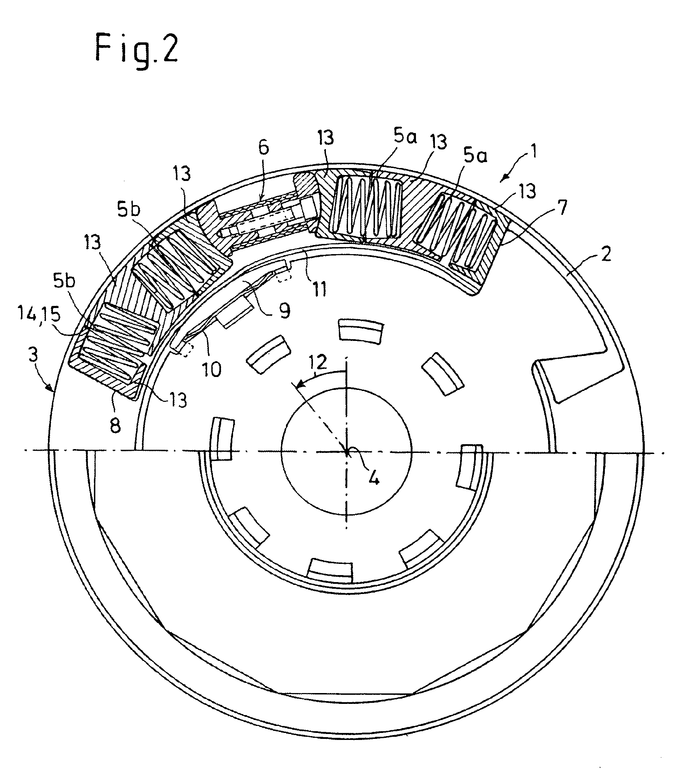

Figur 2 zeigt den Drehschwingungsdämpfer 1, wobei das erste Drehteil 2 im Vergleich zu der in Figur 1 gezeigten Lage gegen den Uhrzeigersinn verdreht ist. Dies wird auch deutlich an einem in Figur 2 gekennzeichneten Verdrehwinkel 12, der in der in Figur 1 gezeigten relativen Lage der beiden Drehteile 2, 3 den Wert null aufweist.

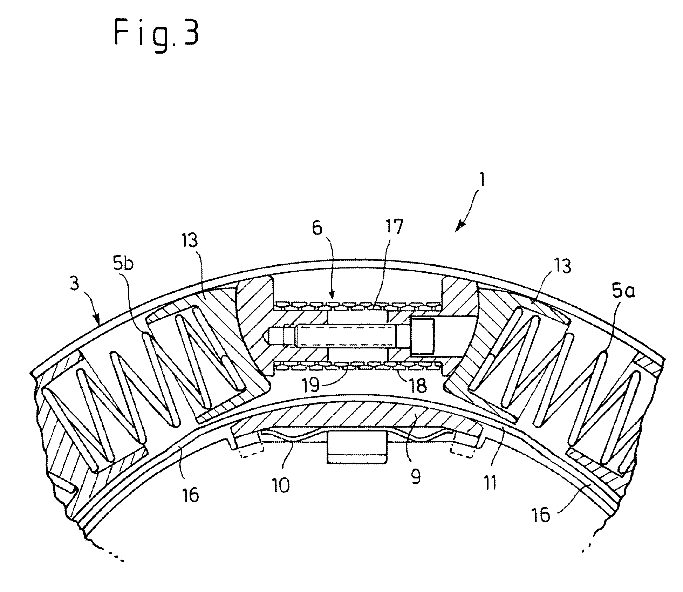

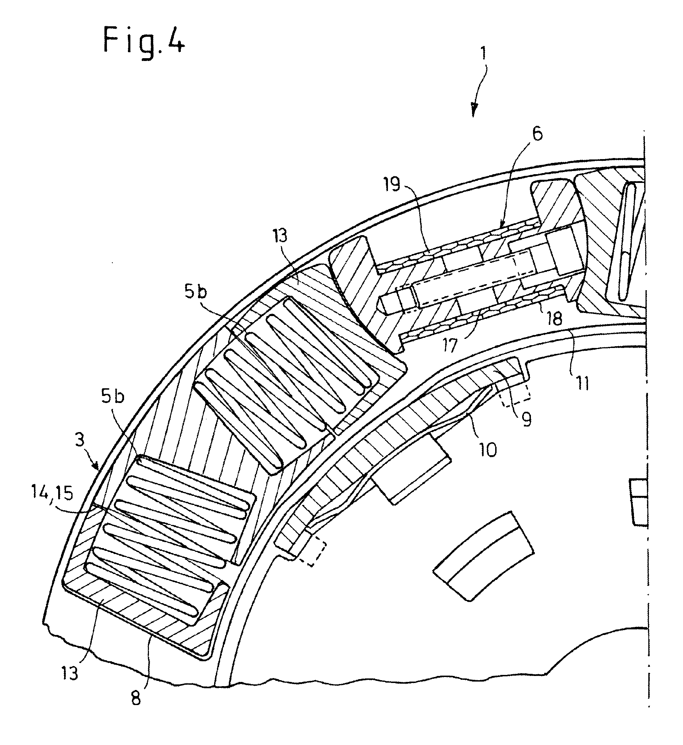

In der Lage der Figur 2 lassen sich die Schraubenfedern 5a, 5b nicht weiter zusammendrücken. Die Schraubenfedern 5a, 5b stützen sich jeweils an Schraubenfederhalterungen 13 ab, die in Umfangsrichtung jeweils zwei stirnseitige Enden 14, 15 aufweisen. Das stirnseitiges Ende 14 einer Schraubenfederhalterung 13 berührt dabei das gegenüberliegende, stirnseitige Ende 15 einer benachbarten Schraubenfederhalterung 13. Auch die Ringfeder 6 lässt sich in der Figur 2 gezeigten Lage nicht weiter zusammendrücken. Dies lässt sich besser den Figuren 3 und 4 entnehmen, die die Ringfeder 6 in einer vergrößerten Ansicht darstellen.

Figur 3 zeigen einen vergrößerten Ausschnitt des erfindungsgemäßen Drehschwingungsdämpfers 1 in der Lage gemäß Figur 1. Zu erkennen ist, daß die ringförmige Reibfläche 11 des zweiten Drehteils 3 zwei Abflachungen aufweist, die in Bezug von der in Figur 3 dargestellten Lage des Reibelements 9, die der statischen Ruhelage des Drehschwingungsdämpfers 1 entspricht, symmetrisch angeordnet sind. Werden das erste Drehteil 2 und das zweite Drehteil 3 relativ zueinander verdreht, gleitet, wie oben bereits beschrieben, das Reibelement 9 entlang der Reibfläche 11. Erreicht das Reibelement 9 die Abflachung 16, wird die Blattfeder 10 zusammengedrückt. Dadurch steigt die Federkraft der Blattfeder 10 an, was zu einer erhöhten Reibkraft zwischen ersten Drehteil 2 und zweiten Drehteil 3 führt. Insbesondere lässt sich der Fahrkomfort bei Fahrbedingungen, bei denen lediglich geringe oder mittlere Dämpfungsraten erforderlich sind, durch die oben beschriebene Reibanordnung, bestehend aus Reibelement 9, Blattfeder 10 und Reibfläche 11 mit Abflachungen 16, verbessern.

Die Ringfeder 6 weist mehrere Innenringe 17 und mehrere Außenringe 18 auf. Die Innenringe 17 und Außenringe 18 sind in abwechselnder Folge nacheinander in axialer Richtung der Ringfeder 6 angeordnet. Wird die Ringfeder 6 axial zusammengedrückt, schieben sich die Außenringe 18 auf die Innenringe 17. Dies erfolgt entlang der kegelförmigen Umfangsflächen der Innenringe 17 beziehungsweise der Außenringe 18. Wie schon oben beschrieben, stellt ein Außenring 18 ein Reibelement dar, das auf einer rampenförmigen Reibfläche 19 gleitet, wodurch beim Gleiten entlang der Reibfläche 19 der ebenfalls als Feder wirkende Außenring 18 weiter verformt wird. Für den Innenring 17 gilt sinngemäß das Gleiche.

In Figur 4 liegen die Innenringe 17 mit ihren stirnseitigen Enden aneinander an, so daß sie in axialer Richtung der Ringfeder 6 eine starre Säule bilden. Auch die Außenringe 18 bilden eine starre Säule. Die Ringfeder 6 kann nicht weiter zusammengedrückt werden. Unter Berücksichtigung, daß Figur 4 eine Teilvergrößerung der Figur 2 ist und daß in Figur 2 der Federweg der Schraubenfedern 5 erschöpft ist, stellt Figur 2 eine Lage der maximalen Verdrehung zwischen erstem Drehteil 2 und zweitem Drehteil 3 dar.

Da die Schraubenfedern 5a, 5b eine wesentlich geringere Federkonstante als die Ringfeder 6 aufweisen, werden, ausgehend von der in Figur 1 gezeigten Lage, bei einer relativen Drehbewegung der beiden Drehteile 2, 3 zunächst nur die Schraubenfedern 5a, 5b zusammengedrückt. Ist der maximale Federweg der Schraubenfedern 5 durch die gegenseitige Anlage der Schraubenfederhalterungen 13 erschöpft, wird bei weiterer relativen Drehbewegung der Drehteile 2, 3 die Ringfeder 6 zusammengedrückt. Somit werden Schläge zwischen den Drehteil 2, 3 in der unmittelbaren Nähe der maximalen Verdrehung der Drehteil 2, 3 durch die Ringfeder 6 abgefangen. Dies erhöht insbesondere den Fahrkomfort bei Lastwechseln im Antriebsstrang.

Das in den Figuren 1 bis 4 gezeigte bevorzugte Ausführungsbeispiel weist somit mehrere Reibelemente (z. B. Reibelement 9, Außenring 18) mit entsprechend zugeordneten Reibflächen 11,19 auf. Dabei ist deren Auslegung hinsichtlich Reibkraft in Abhängigkeit des Verdrehwinkels 12 sehr unterschiedlich. Durch geeignete Verwendung mehrerer Reibelemente 9, 18 mit entsprechend zugeordneten rampenförmigen Reibflächen 11, 19 lassen sich daher die zum Teil sehr unterschiedlichen Anforderungen an das Dämpfungsverhalten eines Drehschwingungsdämpfers 1 in einfacher Weise erfüllen.

## Patentansprüche

1. Drehschwingungsdämpfer (1), insbesondere für Kraftfahrzeuge, mit wenigstens einem ersten Drehteil (2) und einem zweiten Drehteil (3), wobei
- die beiden Drehteile (2,3) auf einer Drehachse (4) angeordnet sind und entgegen der Wirkung wenigstens eines Energiespeichers (5a, 5b) relativ zueinander drehbeweglich sind,
- bei einer Drehbewegung zwischen erstem (2) und zweitem Drehteil (3) wenigstens ein Reibelement (9) entlang einer Reibfläche (11) gleitet und
- wenigstens eine Feder (10) das Reibelement (9) gegen die Reibfläche (11) drückt, und
- die Reibfläche (11) als Rampe ausgebildet ist, wodurch beim Gleiten des Reibelements (9) entlang der Reibfläche (11) die Feder (10) verschieden weit ausgelenkt wird,
**dadurch gekennzeichnet, daß**
das Reibelement (9) drehfest an dem ersten Drehteils (2) befestigt ist und daß die Feder (10) das Reibelement (9) in radialer Richtung gegen eine im Wesentlichen ringförmige Umfangsfläche des zweites Drehteils (3) drückt.

2. Drehschwingungsdämpfer (1) nach Anspruch 1,
**dadurch gekennzeichnet, daß**
die ringförmige Umfangsfläche des zweiten Drehteils (3) nach innen gerichtet ist, wobei das an dem ersten Drehteil (2) befestigte Reibelement (9) radial nach außen gedrückt wird.

3. Drehschwingungsdämpfer (1) nach einem der Ansprüche 1 oder 2,
**dadurch gekennzeichnet, daß**
die Feder (10) als Blattfeder ausgebildet ist.

4. Drehschwingungsdämpfer (1) nach einem der Ansprüche 1 bis 3,
**dadurch gekennzeichnet, daß**
das Reibelement (9) eine gewölbte Fläche aufweist, die an der Reibfläche (11) anliegt.

5. Drehschwingungsdämpfer (1) nach Anspruch 1,
**dadurch gekennzeichnet, daß**
ein weiteres Reibelement (18) und eine weitere Reibfläche (19) ein Element einer Ringfeder (6) bilden.

6. Drehschwingungsdämpfer (1) nach Anspruch 5,
**dadurch gekennzeichnet, daß**
die Ringfeder (6) mehrere in axialer Richtung hintereinander angeordnete Innenringe (17) und Außenringe (18) aufweist, wobei ein Innenring (17) wenigstens eine nach außen gerichtete Kegelfläche aufweist, ein Außenring (18) wenigstens eine nach innen gerichtete Kegelfläche aufweist, und die Kegelfläche des Außenrings (18) die Kegelfläche des Innenrings (17) berührt.

7. Drehschwingungsdämpfer (1) nach Anspruch 5,
**dadurch gekennzeichnet, daß**
die Ringfeder (6) einen maximalen Federweg aufweist, der durch die Anlage von stirnseitigen Enden der Innenringe (17) und/oder durch Anlage von stirnseitigen Enden der Außenringe (18) definiert wird.

8. Drehschwingungsdämpfer (1) nach Anspruch 5 oder 6,
**dadurch gekennzeichnet, daß**
die Achse der Ringfeder (6) im Wesentlichen in Umfangsrichtung des ersten und zweiten Drehteils (2, 3) verläuft, wobei ein erstes stirnseitiges Ende der Ringfeder (6) sich in Umfangsrichtung an dem ersten Drehteil (2) abstützt und ein zweites stirnseitiges Ende der Ringfeder (6) sich in Umfangsrichtung an dem zweiten Drehteil (3) abstützt.

9. Drehschwingungsdämpfer (1) nach Anspruch 8,
**dadurch gekennzeichnet, daß**
in Umfangsrichtung des ersten und zweiten Drehteils (2, 3) zwischen dem ersten stirnseitigen Ende der Ringfeder (6) und dem ersten Drehteil (2) wenigstens eine erste Schraubenfeder (5a) angeordnet ist und/oder zwischen dem zweiten stirnseitigen Ende der Ringfeder (6) und dem zweiten Drehteil (3) wenigstens eine zweite Schraubenfeder (5b) angeordnet ist.

## Claims

1. Torsional vibration damper (1), especially for motor vehicles, having at least a first rotatable component (2) and a second rotatable component (3),
- the two rotatable components (2, 3) being arranged on one axis of rotation (4) and being rotationally moveable in relation to one another against the action of at least one energy storage device (5a, 5b),
- at least one friction element (9) sliding along a friction face (11) under a rotational movement between the first rotatable component (2) and the second rotatable component (3),
- at least one spring (10) pressing the friction element (9) against the friction face (11), and
- the friction face (11) being embodied as a ramp, so that the spring (10) is deflected to a varying degree as the friction element (9) slides along the friction face (11),
**characterized in that** the friction element (9) is rotationally fixed to the first rotatable component (2) and **in that** the spring (10) presses the friction element (9) radially against a substantially annular peripheral face of the second rotatable component (3).

2. Torsional vibration damper (1) according to Claim 1, **characterized in that** the annular peripheral face of the second rotatable component (3) faces inwards, the friction element (9) fixed to the first rotatable component (2) being pressed radially outwards.

3. Torsional vibration damper (1) according to either of Claims 1 or 2, **characterized in that** the spring (10) is embodied as a leaf spring.

4. Torsional vibration damper (1) according to one of Claims 1 to 3, **characterized in that** the friction element (9) has an arched face which bears against the friction face (11).

5. Torsional vibration damper (1) according to Claim 1, **characterized in that** a further friction element (18) and a further friction face (19) form an element of an annular spring (6).

6. Torsional vibration damper (1) according to Claim 5, **characterized in that** the annular spring (6) comprises a plurality of inner rings (17) and outer rings (18) arranged axially in series, an inner ring (17) comprising at least one outward facing conical surface, an outer ring (18) comprising at least one inward facing conical surface, and the conical surface of the outer ring (18) being in contact with the conical surface of the inner ring (17).

7. Torsional vibration damper (1) according to Claim 5, **characterized in that** the annular spring (6) has a maximum spring travel, which is defined by the abutment of end faces of the inner rings (17) and/or by the abutment of end faces of the outer rings (18).

8. Torsional vibration damper (1) according to Claim 5 or 6, **characterized in that** the axis of the annular spring (6) runs substantially in the peripheral direction of the first and second rotatable components (2, 3), a first end face of the annular spring (6) resting peripherally on the first rotatable component (2) and a second end face of the annular spring (6) resting peripherally on the second rotatable component (3).

9. Torsional vibration damper (1) according to Claim 8, **characterized in that** in the peripheral direction of the first and second rotatable components (2, 3) at least a first helical spring (5a) is arranged between the first end face of the annular spring (6) and the first rotatable component (2) and/or at least a second helical spring (5b) is arranged between the second end face of the annular spring (6) and the second rotatable component (3).

## Revendications

1. Amortisseur de vibrations torsionnelles (1), notamment pour véhicules, comprenant au moins une première partie rotative (2) et une deuxième partie rotative (3),
- les deux parties rotatives (2, 3) étant disposées sur un axe de rotation (4) et pouvant tourner l'une par rapport à l'autre à l'encontre de l'effet d'au moins un accumulateur d'énergie (5a, 5b),
- en cas de mouvement de rotation entre la première (2) et la deuxième (3) partie rotative, au moins un élément de frottement (9) glissant le long d'une surface de frottement (11) et
- au moins un ressort (10) pressant l'élément de frottement (9) contre la surface de frottement (11), et
- la surface de frottement (11) étant réalisée sous forme de rampe, de sorte que lors du glissement de l'élément de frottement (9) le long de la surface de frottement (11), le ressort (10) soit dévié dans une mesure différente,
**caractérisé en ce que**
l'élément de frottement (9) est fixé de manière solidaire en rotation à la première partie rotative (2), et **en ce que** le ressort (10) presse l'élément de frottement (9) dans la direction radiale contre une surface périphérique essentiellement annulaire de la deuxième partie rotative (3).

2. Amortisseur de vibrations torsionnelles (1) selon la revendication 1,
**caractérisé en ce que**
la surface périphérique annulaire de la deuxième partie rotative (3) est orientée vers l'intérieur, l'élément de frottement (9) fixé à la première partie rotative (2) étant pressé radialement vers l'extérieur.

3. Amortisseur de vibrations torsionnelles (1) selon l'une quelconque des revendications 1 ou 2,
**caractérisé en ce que**
le ressort (10) est réalisé sous forme de ressort à lame.

4. Amortisseur de vibrations torsionnelles (1) selon l'une quelconque des revendications 1 à 3,
**caractérisé en ce que**
l'élément de frottement (9) présente une surface courbe qui s'applique contre la surface de frottement (11).

5. Amortisseur de vibrations torsionnelles (1) selon la revendication 1,
**caractérisé en ce**
**qu'**un autre élément de frottement (18) et une autre surface de frottement (19) forment un élément d'un ressort annulaire (6).

6. Amortisseur de vibrations torsionnelles (1) selon la revendication 5,
**caractérisé en ce que**
le ressort annulaire (6) présente plusieurs bagues internes (17) et bagues externes (18) disposées les unes derrière les autres dans la direction axiale, une bague interne (17) présentant au moins une surface conique orientée vers l'extérieur, une bague externe (18) présentant au moins une surface conique orientée vers l'intérieur et la surface conique de la bague externe (18) venant en contact avec la surface conique de la bague interne (17).

7. Amortisseur de vibrations torsionnelles (1) selon la revendication 5,
**caractérisé en ce que**
le ressort annulaire (6) présente une course de ressort maximale qui est définie par l'application d'extrémités du côté frontal des bagues internes (17) et/ou par l'application d'extrémités du côté frontal des bagues externes (18).

8. Amortisseur de vibrations torsionnelles (1) selon la revendication 5 ou 6,
**caractérisé en ce que**
l'axe du ressort annulaire (6) s'étend essentiellement dans la direction périphérique de la première et de la deuxième partie rotative (2, 3), une première extrémité du côté frontal du ressort annulaire (6) s'appuyant dans la direction périphérique contre la première partie rotative (2) et une deuxième extrémité du côté frontal du ressort annulaire (6) s'appuyant dans la direction périphérique contre la deuxième partie rotative (3).

9. Amortisseur de vibrations torsionnelles (1) selon la revendication 8,
**caractérisé en ce que**
l'on dispose au moins un premier ressort à boudin (5a) dans la direction périphérique de la première et de la deuxième partie rotative (2, 3) entre la première extrémité du côté frontal du ressort annulaire (6) et la première partie rotative (2), et/ou au moins un deuxième ressort à boudin (5b) entre la deuxième extrémité du côté frontal du ressort annulaire (6) et la deuxième partie rotative (3).
